# EUROPEAN PATENT APPLICATION

(11) **EP 2 674 945 A1**
(43) Date of publication of application: **18.12.2013**
(21) Application number: 13151592.6
(22) Date of filing: 17.01.2013
(51) Int. Cl.: G11B 19/02, G11B 20/10, H04N 5/60

(54) **Electronic device for suppressing noise**

(30) Priority: 15.06.2012 CN 201210197873
(71) Applicant: Hong Fu Jin Precision Industry (ShenZhen) Co., Ltd., Shenzhen City, Guangdong 518109 (CN); Hon Hai Precision Industry Co., Ltd., New Taipei City (TW)
(72) Inventor: Deng, Xue-bing, Shenzhen City, Guangdong Province (CN); Wang, Tao, Shenzhen City, Guangdong Province (CN); Cheng, Hai-long, Shenzhen City, Guangdong Province (CN); Ma, Xiao-hui, Shenzhen City, Guangdong Province (CN); Lin, Kuo-pin, Tu-Cheng, New Taipei (TW); Li, Xin-ping, Shenzhen City, Guangdong Province (CN)
(74) Representative: Gray, John James

(57) **Abstract**

An electronic device (100) capable of audio files with different formats includes a power supply (10), a switching circuit (40), an audio control module (50), an audio output module (60), and a detecting module (30). The power supply (10) supplies a first voltage and a second voltage. The detecting module (30) detects whether the format of the audio file being played changes. The detecting module (30) generates a first detecting signal during a first predetermined time period from a point in time when the format of the audio file changes time point, and the switching circuit (40) transmits the first voltage to the audio control module (50) in response to the first detecting signal. The audio control module (50) receives the second voltage and generates a first signal based on the first voltage and the second voltage. The audio output module (60) is disabled from outputting audio signal of the audio file.

## Description

### Description of Related Art

Electronic devices, such as DVD player, include a micro control unit (MCU) and an audio output module. Noise may be generated when the electronic device switches between the power-on state and the power-off state or changing between different formats of audio files. The MCU only controls the audio output module to be disabled when the electronic device switches between a power-on state and a power-off state, thus the noise is prevented from being outputted. However, the noise generated when changing between different formats of audio files is still being outputted.

Therefore, there is room for improvement in the art.

### Summary

According to an exemplary embodiment of the invention, an electronic device capable of outputting audio files having different formats includes a power supply, a switching circuit, an audio control module, an audio output module, and a detecting module. The power supply supplies a first voltage and a second voltage. The detecting module detects whether the format of the audio file changes. The detecting module generates a first detecting signal during a first predetermined time period from a point in time when the format of the audio file changes, and the switching circuit transmits the first voltage to the audio control module in response to the first detecting signal. The audio control module receives the second voltage and generates a first signal based on the first voltage and the second voltage. The audio output module is disabled from outputting audio signal of the audio file.

### BRIEF DESCRIPTION OF THE DRAWINGS

Embodiments of the invention will now be described, by way of example only, with reference to the accompanying drawings. Many aspects of the embodiments can be better understood with references to the following drawings. The components in the drawings are not necessarily drawn to scale, the emphasis instead being placed upon clearly illustrating the principles of the embodiments. Moreover, in the drawings, like reference numerals designate corresponding parts throughout two views.

FIG. 1 is a block diagram of an electronic device in accordance with one embodiment.

FIG. 2 is a circuit diagram of the electronic device of FIG. 1 in accordance with one embodiment.

### DETAILED DESCRIPTION

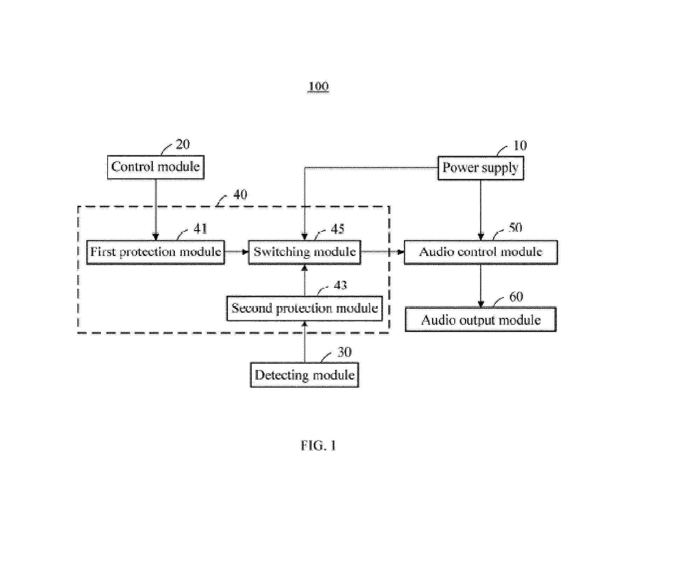

FIG. 1 shows an electronic device 100 of one embodiment of the present disclosure. The electronic device 100 includes a power supply 10, a control module 20, a detecting module 30, a switching circuit 40, an audio control module 50, and an audio output module 60. The electronic device 100 outputs audio signal and capable of generating noise when switching between a first state and a second state or changing between different formats of audio files. The electronic device 100 prevents the noise from being outputted. In the embodiment, the first state indicates that the electronic device 100 is powered on and the second state indicates that the electronic device 100 is powered off. In the other embodiment, the second state indicates that the electronic device 100 is in standby.

The power supply 10 provides a first voltage to the switching circuit 40 and a second voltage to the audio control module 50. In the embodiment, the first voltage is a positive voltage and the second voltage is a negative voltage.

The control module 20 is connected to the switching circuit 40. The control module 20 generates a first control signal during a first predetermined time period from the point in time when the electronic device 100 switches between the first state and the second state, and generates a second control signal after the first predetermined time period. In the embodiment, the first control signal is a logic low voltage level signal and the second control signal is a logic high voltage level signal.

The detecting module 30 is connected to the switching circuit 40. The detecting module 30 generates a first detecting signal in a second predetermined time period from the point in time when the format of the audio files changes, and generates a second detecting signal after the second predetermined time period. In the embodiment, the first detecting signal is a logic low voltage level signal and the second detecting signal is a logic high voltage level signal; the second predetermined time period is equal to the first predetermined time period. In the other embodiments, the second predetermined time period can be shorter or longer than the first predetermined time period.

The switching circuit 40 is connected to the power supply 10, the control module 20, and the detecting module 30. The switching circuit 40 includes a first protection module 41, a second protection module 43, and a switching module 45.

The first protection module 41 is connected between the control module 20 and the switching module 45. The first protection module 41 transmits the first control signal to the switching module 45 when the control module 20 generates the first control signal and prevents the second control signal from being transmitted to the switching module 45 when the control module 20 generates the second control signal.

The second protection module 43 is connected between the detecting module 30 and the switching module 45. The second protection module 43 transmits the first detecting signal to the switching module 45 when the detecting module 30 generates the first detecting signal and prevents the second detecting signal from being transmitted to the switching module 45 when the detecting module 30 generates the second detecting signal.

The switching module 45 is connected to the power supply 10, the first protection module 41, the second protection module 43, and the audio control module 50. The switching module 45 transmits the first voltage to the audio control module 50 in response to the first control signal or the first detecting signal and stops transmitting the first voltage to the audio control module 50 without the first control signal and the first detecting signal.

The audio control module 50 is connected to the power supply 10 and the audio output module 60. The audio control module 50 generates a first signal based on the second voltage. The audio control module 50 further generates a second signal based on the first voltage and the second voltage. In the embodiment, the first signal is a logic high voltage level and the second signal is a logic low voltage level.

The audio output module 60 is enabled to output the audio signal of the audio file in response to the first signal, and is disabled from outputting the audio signal of the audio file in response to the second signal.

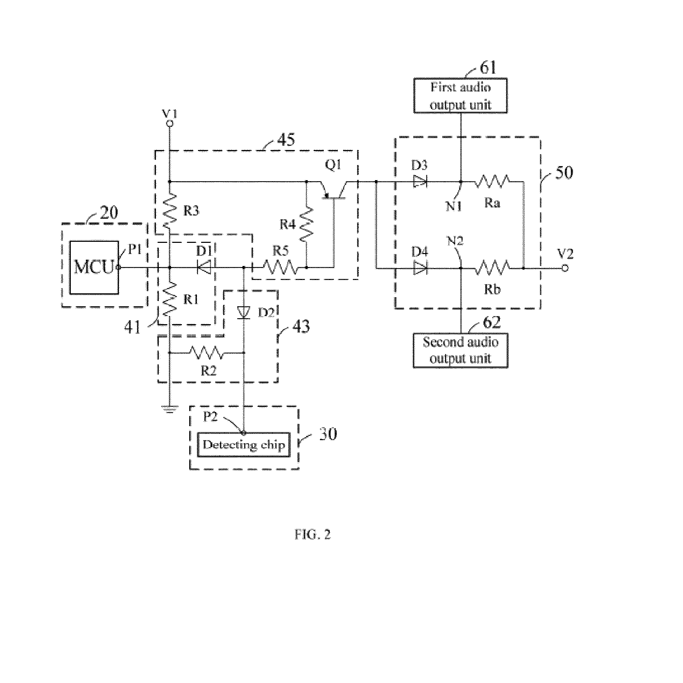

The power supply 10 includes a first power terminal V1 (as shown in FIG. 2) and a second power terminal V2 (as shown in FIG. 2). The first power terminal V1 provides voltage to the switching module 45. The second power terminal V2 provides voltage to the audio control module 50.

Referring to FIG. 2, the control module 20 includes a first pin P1. The first pin P1 is connected to the first protection module 41. In the embodiment, the control module 20 is a MCU.

The detecting module 30 includes a second pin P2. The second pin P2 is connected to the second protection module 43. In the embodiment, the detecting module 30 is a chip.

The first protection module 41 includes a first resistor R1 and a first diode D1. One end of the first resistor R1 is connected to the switching module 45, and the other end of the first resistor R1 is grounded. An anode of the first diode D1 is connected to the switching module 45, and a cathode of the first diode D1 is connected to the end of the first resistor R1 which is connected to the switching module 45. The first pin P1 is connected to the cathode of the first diode D1.

The second protection module 43 includes a second resistor R2 and a second diode D2. One end of the second resistor R2 is connected to the second pin P2, and the other end of the second resistor R2 is grounded. An anode of the second diode D2 is connected to the switching module 45, and a cathode of the second diode D2 is grounded through the second resistor R2.

The switching module 45 includes a transistor Q1, a third resistor R3, a fourth resistor R4, and fifth resistor R5. A base of the transistor Q1 is connected to the anodes of the first diode D1 and the second diode D2 through the fifth resistor R5. An emitter of the transistor Q1 is connected to the first power terminal V1. A collector of the transistor Q1 is connected to the audio control module 50. One end of the third resistor R3 is connected to the emitter of the transistor Q1, and the other end of the third resistor R3 is connected to the cathode of the first diode D1. One end of the fourth resistor R4 is connected to the emitter of the transistor Q1, and the other end of the fourth resistor R5 is connected to the base of the transistor Q1. In the embodiment, the first transistor Q1 is a pnp type bipolar junction transistor.

The audio control module 50 includes a third diode D3, a fourth diode D4, a first protecting resistor Ra, a second protecting resistor Rb, a first node N1, and a second node N2. An anode of the third diode D3 is connected to the collector of the transistor Q1, a cathode of the third diode D3 is connected to the second power terminal V2 through the first protecting resistor Ra. An anode of the fourth diode D4 is connected to the collector of the transistor Q1, a cathode of the fourth diode D4 is connected to the second power terminal V2 through the second protecting resistor Rb.

The first audio output unit 61 is connected to the first node N1. In the embodiment, the first audio output unit 61 is a loudspeaker.

The second audio output unit 62 is connected to the second node N2. In the embodiment, the second audio output unit 61 is an earphone.

When the electronic device 100 switches between the first state and the second state, the first pin P1 generates the first control signal, and the second pin P2 generates the second detecting signal. The difference in voltage between the anode and the cathode of the first diode D1 is larger than 0.3V, thus the first diode D1 is turned on. The difference in voltage between the anode and the cathode of the second diode D2 is smaller than 0.3V, thus the second diode D2 is turned off. A first electrical path from the power terminal V1 to the first pin P1 is established, the first electrical path is formed by the fourth resistor R4, the fifth resistor R5, and the first diode D1. A second electrical path from the power terminal V1 to the second pin P2 is disconnected, the second electrical path is formed by the fourth resistor R4, the fifth resistor R5, and the second diode D2. The difference in voltage between the base and the emitter of the transistor Q1 is smaller than 0V, the transistor Q1 is turned on. The first power terminal V1 outputs the first voltage to the third diode D3 and the fourth diode D4 through the transistor Q1. The difference in voltage between the anode and the cathode of the third diode D3 and the fourth diode D4 are larger than 0.3V, the third diode D3 and the fourth diode D4 are all turned on. The voltage at the first node N1 and the second node N2 are pulled up, thus the first audio output unit 61 and the second audio output unit 62 are disabled and can not output audio signals. After the first predetermined time period, the first pin P1 generates the second control signal and the second pin P2 still generates the second detecting signal, thus both of the first diode D1 and the second diode D2 are turned off, thus both of the first electrical path and the second electrical path are disconnected. The difference in voltage between the base and the emitter of the transistor Q1 is almost 0V, the transistor Q1 is turned off. The voltage at the first node N1 and the second node N2 are pulled down by the second power terminal V2. The first audio output unit 61 and the second audio output unit 62 are enabled and outputs audio signals.

When the format of the audio file in the electronic device 100 changes, the first pin P1 generates the second control signal, and the second pin P2 generates the first detecting signal. The difference in voltage between the anode and the cathode of the first diode D1 is smaller than 0.3V, the first diode D1 is turned off. The difference in voltage between the anode and the cathode of the second diode D1 is larger than 0.3V, the second diode D2 is turned on. The first electrical path is disconnected, and the second electrical path is established. The difference in voltage between the base and the emitter of the transistor Q1 is smaller than 0V, the transistor Q1 is turned on. The first power terminal V1 outputs the first voltage to the third diode D3 and the fourth diode D4 through the transistor Q1. The difference in voltage between the anode and the cathode of the third diode D3 and the fourth diode D4 are larger than 0.3V, the third diode D3 and the fourth diode D4 are all turned on. The voltage at the first node N1 and the second node N2 are pulled up, thus the first audio output unit 61 and the second audio output unit 62 are disabled to output audio signals. After the first predetermined time period, the first pin P1 still generates the second control signal and the second pin P2 generates the second detecting signal, thus both of the first diode D1 and the second diode D2 are turned off, thus both of the first electrical path and the second electrical path are disconnected. The difference in voltage between the base and the emitter of the transistor Q1 is almost 0V, the transistor Q1 is turned off. The voltage at the first node N1 and the second node N2 are pulled down by the second power terminal V2. The first audio output unit 61 and the second audio output unit 62 are enabled to output audio signals.

As described, under the situation of being switching between the power-on state and the power-off state and changing the format of the audio file, the noise is prevented from being outputted. Therefore, the function of the electronic device is improved.

It is to be understood, however, that even though information and advantages of the present embodiments have been set forth in the foregoing description, together with details of the structures and functions of the present embodiments, the disclosure is illustrative only; and that changes may be made in detail, especially in the matters of shape, size, and arrangement of parts within the principles of the present embodiments to the full extent indicated by the broad general meaning of the terms in which the appended claims are expressed.

## Claims

1. An electronic device capable of playing audio files with different formats, comprising:
a power supply providing a first voltage and a second voltage;
a switching circuit receiving the first voltage;
an audio control module receiving the second voltage;
an audio output module capable of outputting audio signals from an audio file; and
a detecting module connected to the audio output module and adapted to detect whether the format of the audio file being played changes;
wherein when the format of the audio file changes, the detecting module generates a first detecting signal during a first predetermined time period from a point in time when the format of the audio file changes, the switching circuit transmits the first voltage to the audio control module in response to the first detecting signal, the audio control signal generates a first signal based on the first voltage and the second voltage, the audio output module is disabled from outputting audio signals of the audio file in response to the first signal.

2. The electronic device of claim 1, wherein the detecting module further generates a second detecting signal after the first predetermined time period; the switching circuit stops transmitting the first voltage to the audio control module in response to the second detecting signal, the audio control module generates a second signal based on the second voltage, the audio output module is enabled to output audio signals of the audio file in response to the second signal.

3. The electronic device of claim 1, wherein the electronic device further comprises a control module; the control module generates a first control signal when the electronic device switches between a first state and a second state during a second predetermined time period from a point in time when the electronic device is switched between the first state and the second state, the switching circuit transmits the first voltage to the audio control module in response to the first control signal.

4. The electronic device of claim 3, wherein the control module further generates a second control signal after the second predetermined time period, the switching circuit stops transmitting the first voltage to the audio control module in response to the second control signal.

5. The electronic device of claim 3, wherein the switching circuit comprises a switching module and a first protection module connected between the switching module and the control module; when the control module generates the first control signal, the first protection module transmits the first control signal to the switching module and the switching module transmits the first voltage to the audio control module in response to the first control signal; when the control module generates the second control signal, the first protection module prevents the second detecting signal from being transmitted to the switching module in response to the second control signal and the switching module stops transmitting the first voltage without the first control signal.

6. The electronic device of claim 5, wherein the first protection module comprises a first diode and a first resistor; an anode of the first diode is connected to the switching module, a cathode of the first diode is connected to the switching module and the control signal; one end of the first resistor is connected to the cathode of the first diode, and the other end of the first resistor is grounded.

7. The electronic device of claim 5, wherein the switching module comprises a transistor, a second resistor, a third resistor, and a fourth resistor; a base of the transistor is connected to the first protection module through the second resistor, an emitter of the transistor is connected to the power supply, a collector of the transistor is connected to the audio control module; one end of the third resistor is connected to the power supply, and the other end of the third resistor is connected to the first protection module; one end of the fourth resistor is connected to the emitter of the transistor, and the other end of the fourth resistor is connected to the base of the transistor.

8. The electronic device of claim 5, wherein the switching circuit further comprises a second protection module connected between the switching module and the detecting module; when the detecting module generates the first detecting signal, the second protection module transmits the first detecting signal to the switching module and the switching module transmits the first voltage to the audio control module in response to the first detecting signal; the second protection module prevents the second detecting signal from being transmitted to the switching module in response to the second detecting signal and the switching module stops transmitting the first voltage without the second detecting signal.

9. The electronic device of claim 8, wherein the second protection module comprises a second diode and a fifth resistor; an anode of the second diode is connected to the switching module, a cathode of the second diode is grounded through the fifth resistor; the detecting module is connected between the cathode of the second diode and the fifth resistor.

10. The electronic device of claim 1, wherein the first voltage is a positive voltage and the second voltage is a negative voltage.

11. An electronic device capable of playing audio files with different formats, comprising:
a power supply providing a first voltage and a second voltage;
a detecting module adapted to detect whether the format of the audio file being played changes;
a switching circuit receiving the first voltage and capable of establishing a first electrical path from the power supply and the detecting module;
an audio control module connected to the switching circuit and adapted to receive the second voltage; and
an audio output module capable of outputting audio signals from the audio file;
wherein when the format of the audio file being played changes, the switching circuit establishes the first electrical path and the switching circuit transmits the first voltage to the audio control module, the audio control module generates a first signal based on the first voltage and the second voltage, the audio output module is disabled from outputting the audio signal in response to the first signal.

12. The electronic device circuit of claim 11, wherein the switching circuit further disconnects the first electrical path after a first predetermined time period from a point in time when the format of the audio file changes.

13. The electronic device circuit of claim 11, wherein the electronic device further comprises a control module connected to the switching circuit, the switching circuit further establishes a second electrical path from the power supply to the control module when the electronic device switches between a first state and a second state, and the switching circuit transmits the first voltage to the audio control module; the switching circuit further disconnects the second electrical path after a second predetermined time period from a point in time when the electronic device switches between the first state and the second state.

14. The electronic device circuit of claim 13, wherein the switching circuit comprises a switching module and a first protection module connected between the switching module and the detecting module; when the detecting module generates a first detecting signal when the format of the audio file changes and generates a second detecting module after a first predetermined time period from a point in time when the format of the audio file changes, the first protection module transmits the first detecting signal to the switching module and the switching module establishes the first electrical path in response to the first detecting signal and prevents the second detecting signal from being transmitted to the switching module and the first electrical path is cut off.

15. The electronic device circuit of claim 14, wherein the switching circuit further comprises a second protection module connected between the switching module and the control module; the control module generates a first control signal when the electronic device switches between the first state and the second state and generates a second control signal after a second predetermined time period from a point in time when the electronic device switches between the first state and the second state, the second protecting module transmits the first control signal to the switching module and the switching module establishes the second electrical path in response to the first control signal and prevents the second control signal from being transmitted to the switching module and the second electrical path is cut off.
